# EUROPEAN PATENT SPECIFICATION

(11) **EP 4 275 975 B1**
(45) Date of publication and mention of the grant of the patent: **28.01.2026**
(21) Application number: 23172761.1
(22) Date of filing: 11.05.2023
(51) Int. Cl.: B60V 1/14, B60V 3/06, B64C 9/12, B64C 11/00, B60V 1/11

(54) **SINGLE-ENGINE HOVERCRAFT CONTROL SYSTEM AND METHOD**
EINZELMOTOR-SCHWEBEFAHRZEUGSTEUERUNGSSYSTEM UND -VERFAHREN
SYSTÈME ET PROCÉDÉ DE COMMANDE D'AÉROGLISSEUR À MOTEUR UNIQUE

(30) Priority: 13.05.2022 PL 44116722
(43) Date of publication of application: 15.11.2023
(73) Proprietor: SIEC BADAWCZA LUKASIEWICZ-INSTYTUT LOTNICTWA, 02-256 Warszawa (PL)
(72) Inventor: Szafran, Krzysztof, 05-830 Nadarzyn (PL); Zalewski, Wieslaw, 26-800 Bialobrzegi (PL); Janiszewski, Marcin, 05-800 Pruszkow (PL); Kozaczuk, Konrad, 21-220 Siemien (PL)
(74) Representative: LDS Lazewski Depo & Partners

(56) References cited:
- CN-A- 101 032 961
- PL-A1- 430 204
- US-A- 3 861 491
- US-A- 5 096 012
- US-A1- 2006 169 508

## Description

The invention relates to a system and a method for independent control of the propulsion thrust and the mass air flow through the air-cushion of a hovercraft equipped with a single propulsion engine.

Hovercrafts are vehicles that move on an air-cushion above the surface of water or land. Hovercrafts are used, for example, for rescue or patrolling in areas of frozen rivers and lakes, low inland waters and swampy areas.

In single-engine hovercrafts, the propulsion fan rotates inside the duct mounted in the hull of the hovercraft and the pocket distributes the airflow into the thrust generating forward motion and the airflow into the hovercraft's apron, generating the air-cushion. Importantly, depending on the terrain and weather conditions, the required value and ratio of propulsion system power split between progressive thrust generating power and air-cushion varies. From a flight safety point of view, cases such as flying on water or ice with the wind or flying down a fast-moving river are very relevant. For such flight conditions, the pilot must maintain sufficiently high pressure in the air-cushion, while the thrust generating the forward progressive motion should be at a low level so that the hovercraft does not accelerate to dangerous speeds. It is also very important to maintain directional control capability in such a flight condition.

The solution known in the field to regulate the distribution of power between the power generating the progressive thrust and the power generating the air-cushion is to use two motors and two propulsion fans. This solution adds to the complexity of the propulsion system, increasing the production costs of the hovercraft. The use of a separate fan to pump the air-cushion significantly increases the noise generated due to the high speed of such fans.

US 3 861 491 A discloses a propeller mounted toward the front of the vehicle provides both propulsion and air cushion. A body section has lateral openings on each side of the vehicle behind the propeller. Front steering and thrust spoiling are obtained by sets of vanes rotatably mounted in these openings and spaced progressively rearwardly and inwardly in diagonal disposition. In turning, predetermined vanes of one set are turned outward and those of the other set inward. For thrust spoiling, both sets are preferably turned inward. Air flow to rear steering vanes on the outside of a turn is maintained for at least smaller turning angles by initially turning the forward vanes of a diagonal set faster than the rearward vanes of the set, or by using fixed air channels, or both. It is presently preferred to use fixed air channels controlled by respective rearward vanes of the diagonal sets to maintain air flow to the rear steering vanes on the outside of a turn for a major portion or all of the steering range, while reducing air flow to the rear steering vanes on the inside of the turn for at least larger turning ranges within the steering range. Transversely-disposed sets of vanes mounted between the diagonally-disposed sets are controlled to direct air toward the outside of a turn progressively as the turning angle increases. Differential control of air flow to the rear steering vanes is also described.

CN 101 032 961 A1 discloses the double air screw pull in type air-cushion vehicle consists of hull, air screw, engine, baffle wall, air kuppe, baffler, flight deck, control device, rudder, flexible skirt, floater, etc. Two air screws provide the air-cushion vehicle with hovering airflow and forward pulling force, and two air kuppes covering the air screws and the baffle walls separately constitute circular air ducts. These two air screws generate upper backward pull in airflows and lower hovering airflows. The double air screw pull in type air-cushion vehicle has high steerability, and may have wings mounted to form composite air-cushion vehicle. US 2006/169509 A1 discloses an air cushion vehicle and a control mechanism for steering and turning the vehicle. The air cushion vehicle includes a frame having a skirt body extending around the perimeter. An air flow generator may be
positioned on the frame for providing a lift flow and thrust flow. At least one vane is disposed on the frame to direct the thrust flow. At least one fin is disposed on the frame downstream of the vane for directing the thrust flow. A turning controller may be used for moving the vane and fin in a coordinating movement to affect the direction or the motion of the air cushion vehicle.

US 5 096 012 A application discloses a hovercraft which includes a hull having a plurality of diffusion apertures and air skirt for providing a supporting air cushion. An engine drives a propeller which produces an airflow. A movable elevator dynamically divides the propeller airflow between lift and thrust components. A pair of rudders are supported within the thrust component to provide steering.

The description of the Polish Application No. PL 430204 discloses a system of steering a hovercraft comprising at least one fan, at least one directional rudder, a steering member coupled to the directional rudder, and at least two lateral reversing elements independently biasably movable relative to each other, having a resting position in which they do not hinder the airflow, and at least one operating position in which they deflect part of the airflow. Each reversing element is coupled to the directional rudder by means of at least one power assisted unit, the power assisted unit being configured to move the reversing element between its operating and resting positions depending on the value of the directional rudder angle. The solution described in said application description during testing showed that the use of only two directional rudders resulted in insufficient directional control during forward flight. The activation of the thrust reverser required the two rudders to be set in a V-shape and made it impossible to correct the direction of flight during the braking manoeuvre, which is particularly important for flight safety.

The Polish Application No. PL 430204 is considered to be the closest state of art. The drawback of this invention is lack of ability to control the hovercraft while reducing the propulsion of the thrust.

The object of the invention is to provide a solution for the propulsion system and control system of a hovercraft, equipped with a single propulsion motor, allowing the thrust generated by the propulsion fan to be reduced to generate progressive movement, while maintaining a constant mass flow of air through the air-cushion and providing full directional control capability.

A control system of a hovercraft comprising an air cushion forming apron, one motor and one propulsion fan enclosed by a duct in which swivel side flaps are located, at least three directional rudders and horizontal rudders, wherein downstream in the duct behind the propulsion fan and parallel to the ground at least one bottom plate and at least one top plate are located, which plates constitute a pivot mounting for directional rudders, swivel side flaps and horizontal rudders, is characterized in that directly behind the propulsion fan, while regulating the propulsion thrust two swivel side flaps open symmetrically to limit the of the propulsion fan, wherein at least three directional rudders located downstream at the end in the duct operate without interruption in their full range of angular position.

Advantageously, regulating the propulsion thrust and operation of the directional rudders in the full range of the angular position, the air cushion forming apron is supplied with an undisturbed mass air flow.

A control method of a hovercraft comprising an air cushion forming apron, one motor and one propulsion fan enclosed by a duct in which swivel side flaps are located, at least three directional rudders and horizontal rudders, wherein downstream in the duct behind the propulsion fan and parallel to the ground at least one bottom plate and at least one top plate are located, which plates constitute a pivot mounting for directional rudders, swivel side flaps and horizontal rudders, is characterized in that directly behind the propulsion fan the propulsion thrust is regulated by symmetrically opening the two swivel side flaps limiting the propulsion thrust of the propulsion fan, wherein at least three directional rudders located downstream at the end in the duct operate without interruption in their full range of angular position.

Advantageously, when the propulsion thrust is regulated and the direction rudders operate in the full range of the angular position, the air cushion forming apron is supplied with an undisturbed mass air flow.

The present invention is explained in the embodiment illustrated in the drawing, in which
fig. 1 shows a diagram of the hovercraft control system in section through its plane of symmetry in a side view,
fig. 2 shows a diagram of the hovercraft control system in section through the horizontal plane through the axis of rotation of the propulsion fan in top view,
fig. 3 shows a diagram of the propulsion system of a hovercraft with swivel side flaps in the operating position in section through a horizontal plane through the axis of rotation of the propulsion fan in top view.

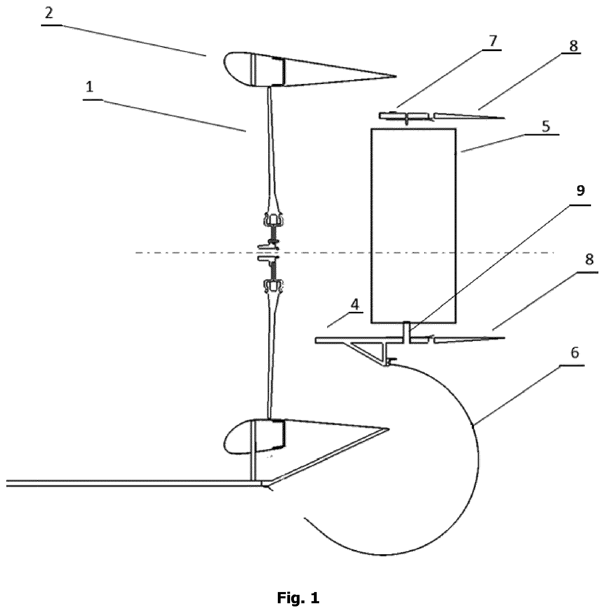

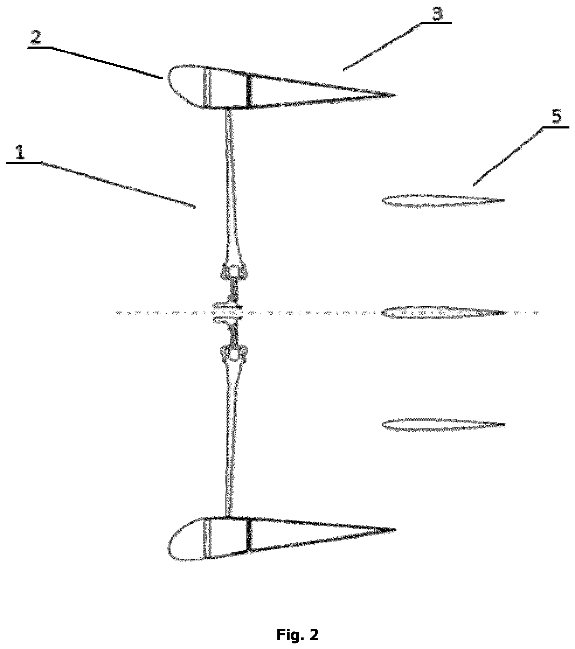

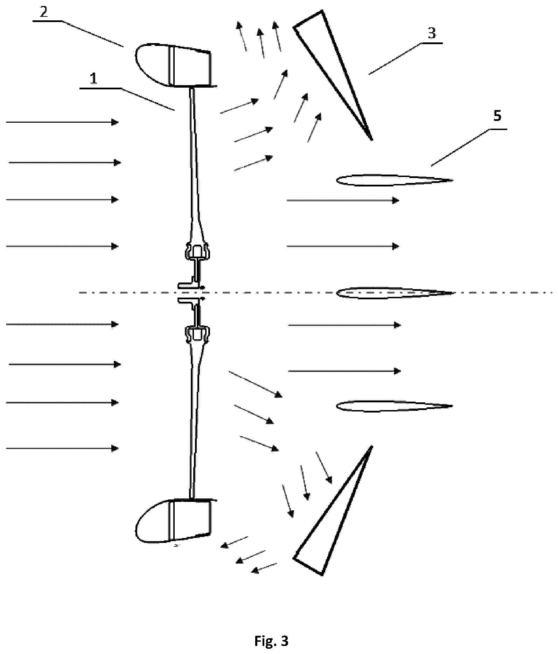

In an embodiment illustrated in figs. 1 and 2, a hovercraft control system comprising one propulsion fan 1 is enclosed by a duct 2. In the duct 2 downstream the propulsion fan 1 and parallel to the ground there is a bottom plate 4 forming a pocket redirecting the airflow to the part generating the propulsion thrust and the part to the air-cushion apron 6. The duct 2 is equipped on both sides with swivel side flaps 3, which in the resting position form the inner surface of the duct 2 and do not hinder the airflow. Downstream the side flaps 3, three aerodynamic directional rudders 5 are mounted in the stream downstream the fan. The duct 2 also has a top plate 7 located therein, which together with the bottom plate 4 constitutes the mounting of the axis of rotation of the directional rudders 5, the swivel side flaps 3 and the horizontal rudders 8. The side flaps 3 have two positions - rest and operating. In the resting position, the side flaps 3 form the outline of the duct 2 of the propulsion fan 1. By increasing the engine power, the pilot increases the speed of the propulsion fan 1, which increases both the thrust value and the amount of air discharged into the air-cushion 6. For flight conditions requiring a decrease in thrust value without changing the amount of air discharged into the air-cushion 6, the pilot, by pressing the appropriate buttons, moves the side flaps 3 into the operating position, as illustrated in fig. 3. In the operating position, the side flaps 3 rotate relative to their own axis with the leading edge outwards of the airflow, the direction of which is illustrated by arrows, redirecting part of the propulsion flow in a forward direction which reduces the resultant of the thrust of the propulsion fan 1. The remaining part of the airflow is directed to the three directional rudders 5 providing directional control of the hovercraft.

The solution according to an embodiment, comprising three directional rudders, increases directional control by 50% during forward flight compared to the solution described in application description No. P.430204 comprising two directional rudders. The ability to pivot the side flaps without closing the directional rudders makes it possible advantageously to reduce the thrust of the propulsion fan while ensuring full directional control. This is particularly important when flying on ice with the wind so as to maintain the air-cushion and full directional control and, in parallel, eliminate acceleration of the hovercraft to dangerous speeds.

## Claims

1. A control system for a hovercraft comprising an air cushion forming an apron (6), a duct (2), one motor and one propulsion fan (1) enclosed by the duct (2), swivel side flaps (3) which are located in the duct, at least three directional rudders (5) located downstream of the duct (2) and horizontal rudders (8), at least one bottom plate (4) forming a pocket redirecting a part of the airflow into the apron of the air-cushion (6), and at least one top plate (7), wherein the at least one bottom plate and the at least one top plate are located in the duct downstream of the propulsion fan (1) and parallel to the ground, wherein the at least one top plate and the at least one bottom plate constitute a pivot mounting for the rotation axis of the at least three directional rudders (5), the swivel side flaps (3) and the horizontal rudders (8),
**characterised in that** the swivel side flaps (3) are configured to rotate symmetrically relative to a longitudinal axis of the hovercraft to reduce the thrust of the propulsion fan (1), while the at least three directional rudders (5) are configured to operate in a full range of angular position independently of the position of the swivel side flaps (3).

2. The control system according to claim 1, wherein while reducing the propulsion thrust and operating the at least three directional rudders (5), the control system is configured to keep the amount of air discharged into the air-cushion (6) constant, while being unaffected by the operation of the swivel side flaps.

3. A control method of a hovercraft
the hovercraft comprising:
an air cushion forming an apron (6), a duct (2), one motor and one propulsion fan (1) enclosed by a the duct (2) swivel side flaps (3) which are located in the duct, at least three directional rudders (5) located downstream of the duct (2)
and horizontal rudders (8), at least one bottom plate (4) forming a pocket redirecting a part of the airflow into the apron of the air-cushion (6) and at least one top plate (7),
wherein the at least one bottom plate and the at least one top plate are located in the duct downstream of the propulsion fan (1) and parallel to the ground wherein the at least one top plate and the at least one bottom plate constitute a pivot mounting for the rotation axis of the at least three directional rudders (5), the swivel side flaps (3) and the horizontal rudders (8),
the control method comprises:
regulating a propulsion thrust of the hovercraft by generating a thrust with the propulsion fan and by symmetrically rotating the swivel side flaps (3) relative to a longitudinal axis of the hovercraft to reduce the propulsion thrust of the propulsion fan (1), and controlling independently a direction of flight of the hovercraft by varying an angle of the at least three directional rudders (5) over a full range of angular position independently of the position of the swivel side flaps (3).

4. The control method of a hovercraft according to claim 3, wherein while regulating the propulsion thrust, and controlling the direction of flight, the amount of air discharged into the air-cushion (6), unaffected by the operation of the swivel side flaps, remains constant.

## Patentansprüche

1. Steuerungssystem für ein Schwebefahrzeug, umfassend ein Luftkissen, das eine Schürze (6) bildet, einen Kanal (2), einen Motor und einen Antriebsventilator (1), die von dem Kanal (2) umschlossen sind, schwenkbare Seitenklappen (3), die sich in dem Kanal befinden, mindestens drei Richtungsruder (5), die sich stromabwärts des Kanals (2) befinden, und horizontale Ruder (8), mindestens eine Bodenplatte (4), die eine Tasche bildet, die einen Teil des Luftstroms in die Schürze des Luftkissens (6) umleitet, und mindestens eine Deckplatte (7), wobei die mindestens eine Bodenplatte und die mindestens eine Deckplatte im Kanal stromabwärts des Antriebsventilators (1) und parallel zum Boden angeordnet sind, wobei die mindestens eine Deckplatte und die mindestens eine Bodenplatte eine Schwenklagerung für die Drehachse der mindestens drei Richtungsruder (5) bilden, die schwenkbaren Seitenklappen (3) und die horizontalen Ruder (8),
**dadurch gekennzeichnet, dass** die schwenkbaren Seitenklappen (3) so ausgestalten sind, dass sie sich symmetrisch relativ zu einer Längsachse des Schwebefahrzeugs drehen, um den Schub des Antriebsventilators (1) zu reduzieren, während die mindestens drei Richtungsruder (5) so ausgestalten sind, dass sie unabhängig von der Position der schwenkbaren Seitenklappen in einem vollen Winkelbereich arbeiten können.

2. Steuerungssystem nach Anspruch 1, wobei das Steuerungssystem so ausgestaltet ist, dass es während der Reduzierung des Antriebsschubs und der Betätigung mindestens drei Richtungsruder (5), deren in das Luftkissen (6) abgegebene Luftmenge konstant gehalten wird, wobei die Betätigung der schwenkbaren Seitenklappen keinen Einfluss darauf hat.

3. Verfahren zur Steuerung eines Schwebefahrzeugs
wobei das Schwebefahrzeug umfasst:
ein Luftkissen, das eine Schürze (6) bildet, einen Kanal (2), einen Motor und einen Antriebsventilator (1), die von dem Kanal (2) umschlossen sind, schwenkbare Seitenklappen (3), die sich in dem Kanal befinden, mindestens drei Richtungsruder (5), die sich stromabwärts des Kanals (2) befinden
und horizontale Ruder (8), mindestens eine Bodenplatte (4), die eine Tasche bildet, die einen Teil des Luftstroms in die Schürze des Luftkissens (6) umleitet , und mindestens eine Deckplatte (7),
wobei die mindestens eine Bodenplatte und die mindestens eine Deckplatte im Kanal stromabwärts des Antriebsventilators (1) und parallel zum Boden angeordnet sind, wobei die mindestens eine Deckplatte und die mindestens eine Bodenplatte eine Schwenkbefestigung für die Drehachse der mindestens drei Richtungsruder (5), der schwenkbaren Seitenklappen (3) und der horizontalen Ruder (8) bilden,
das Verfahren zur Steuerung umfasst:
Regeln eines Antriebsschubs des Schwebefahrzeugs durch Erzeugen eines Schubs mit dem Antriebsventilator und durch symmetrisches Drehen der schwenkbaren Seitenklappen (3) relativ zu einer Längsachse des Schwebefahrzeugs, um den Antriebsschub des Antriebsventilators (1) zu reduzieren, und unabhängiges Steuern einer Flugrichtung des Schwebefahrzeugs durch Variieren eines Winkels der mindestens drei Richtungsruder (5) über einen gesamten Winkelpositionsbereich unabhängig von der Position der schwenkbaren Seitenklappen (3).

4. Verfahren zur Steuerung eines Schwebefahrzeugs Anspruch 3, wobei während der Regelung des Antriebsschubs und der Steuerung der Flugrichtung die in das Luftkissen (6) abgegebene Luftmenge, die von der Betätigung der schwenkbaren Seitenklappen unbeeinflusst bleibt, konstant bleibt.

## Revendications

1. Système de commande pour un aéroglisseur comprenant un coussin d'air formant un tablier (6), un conduit (2), un moteur et un ventilateur de propulsion (1) enfermé dans le conduit (2), des volets latéraux pivotants (3) situés dans le conduit, au moins trois gouvernails directionnels (5) situés en aval du conduit (2) et des gouvernails horizontaux (8), au moins une plaque inférieure (4) formant une poche redirigeant une partie du flux d'air vers le tablier du coussin d'air (6), et au moins une plaque supérieure (7), dans lequel là au moins une plaque inférieure et là au moins une plaque supérieure étant situées dans le conduit en aval du ventilateur de propulsion (1) et parallèles au sol, dans lequel là au moins une plaque supérieure et là au moins une plaque inférieure constituent un support pivotant pour l'axe de rotation des au moins trois gouvernails directionnels (5),
les volets latéraux pivotants (3) et les gouvernails horizontaux (8), **caractérisé en ce que** les volets latéraux pivotants (3) sont configurés pour tourner symétriquement par rapport à un axe longitudinal de l'aéroglisseur afin de réduire la poussée du ventilateur de propulsion (1), tandis que les au moins trois gouvernails directionnels (5) sont configurés pour fonctionner dans une gamme complète de positions angulaires indépendamment de la position des volets latéraux pivotants (3).

2. Système de commande selon la revendication 1, dans lequel, tout en réduisant la poussée de propulsion et en actionnant au moins trois gouvernails directionnels (5), le système de commande est configuré pour maintenir constante la quantité d'air déchargée dans le coussin d'air (6), sans être affecté par le fonctionnement des volets latéraux pivotants.

3. Procédé de commande d'un aéroglisseur,
l'aéroglisseur comprenant:
un coussin d'air formant un tablier (6), un conduit (2), un moteur et un ventilateur de propulsion (1) enfermés par le conduit (2), des volets latéraux pivotants (3) situés dans le conduit, au moins trois gouvernails directionnels (5) situés en aval du conduit (2)
et des gouvernails horizontaux (8), au moins une plaque inférieure (4) formant une poche redirigeant une partie du flux d'air vers le tablier du coussin d'air (6) et au moins une plaque supérieure (7),
dans lequel au moins une plaque inférieure et au moins une plaque supérieure sont situées dans le conduit en aval du ventilateur de propulsion (1) et parallèles au sol, dans lequel au moins une plaque supérieure et au moins une plaque inférieure constituent un support de pivot pour l'axe de rotation des au moins trois gouvernails directionnels (5), des volets latéraux pivotants (3) et des gouvernails horizontaux (8),
le procédé de commande comprend:
la régulation de la poussée de propulsion de l'aéroglisseur en générant une poussée avec le ventilateur de propulsion et en faisant tourner symétriquement les volets latéraux pivotants (3) par rapport à un axe longitudinal de l'aéroglisseur afin de réduire la poussée de propulsion du ventilateur de propulsion (1), et commander indépendamment la direction de vol de l'aéroglisseur en faisant varier un angle des au moins trois gouvernails directionnels (5) sur une plage complète de position angulaire indépendamment de la position des volets latéraux pivotants (3).

4. Procédé de commande d'un aéroglisseur selon la revendication 3, dans lequel, tout en régulant la poussée de propulsion et en commandant la direction de vol, la quantité d'air déchargée dans le coussin d'air (6), non affectée par le fonctionnement des volets latéraux pivotants, demeure constante.
